## Europäisches Patentamt
## European Patent Office
## Office européen des brevets

(19)

(11) Numéro de publication: **0 082 904 B1**

# FASCICULE DE BREVET EUROPEEN

(12)

(45) Date de publication du fascicule du brevet:
**02.04.86**

(51) Int. Cl.⁴: **G 06 F 3/037**, G 06 F 15/40

(21) Numéro de dépôt: **81430047.1**

(22) Date de dépôt: **29.12.81**

(54) **Système de gestion d'informations visualisables et descriptives.**

(43) Date de publication de la demande:
**06.07.83 Bulletin 83/27**

(45) Mention de la délivrance du brevet:
**02.04.86 Bulletin 86/14**

(84) Etats contractants désignés:
**DE FR GB IT**

(56) Documents cités:
**EP - A - 0 030 160**
**EP - A - 0 043 201**
**AU - D - 7 186 581**
**DE - A - 1 499 213**
**US - A - 4 085 446**
**US - A - 4 121 283**

**RESEARCH & DEVELOPMENT, No. 53, avril 1979, pages 14-19, Tokyo, JP. F. MIYAGAWA et al.: "Digital still store"**

(73) Titulaire: **International Business Machines Corporation, Old Orchard Road, Armonk, N.Y. 10504 (US)**

(84) Etats contractants désignés: **DE GB IT**

(73) Titulaire: **Compagnie IBM FRANCE, 5 Place Vendôme, F-75000 Paris 1er (FR)**

(84) Etats contractants désignés: **FR**

(72) Inventeur: **Bouillot, Michel, 16 Avenue de la Réserve, F-06300 Nice (FR)**

(74) Mandataire: **Lattard, Nicole, Compagnie IBM France Département de Propriété Industrielle, F-06610 La Gaude (FR)**

## Description

*Domaine Technique*

La présente invention concerne un système permettant de gérer des informations complexes telles que celles présentées sur des catalogues techniques et offrant à l'utilisateur la possibilité de retrouver de façon simple des informations relatives à des parties de schémas détaillés.

Actuellement dans de nombreux domaines les informations sont représentées sur des catalogues, ce sont par exemple des catalogues de pièces détachées relatives à des machines dont la distribution et l'entretien sont assurés par des détaillants.

La complexité et le nombre des machines et dispositifs divers qui sont mis à la disposition du public nécessitent que ces catalogues soient très détaillés quant aux représentations schématiques y figurant généralement sous forme de vue éclatées. De plus, toutes les informations relatives à ces machines (liste de constituants, instructions de montage, prix qui servent de support aux opérations habituelles de facturation, gestion de stock) nécessitent des rubriques techniques en corrélation avec les schémas et vues d'ensemble, et sont fréquemment sujettes à changement: par exemple les prix, références.

L'utilisateur se trouve donc à avoir à manipuler des catalogues dans lesquels une recherche manuelle est difficile, puis il doit en extraire les différentes références nécessaires pour retrouver dans d'autres documents les informations qu'il recherche: prix, référence technique, instructions de montage.

A ce stade si l'on envisage le traitement habituel de telles informations en vue de réaliser des facturations, gestion de stocks, la recherche manuelle n'a pas encore permis de mettre en oeuvre facilement de tels processus. Ceux-ci devront être initialisés par l'introduction manuelle des différentes références nécessaires à chacun d'eux ce qui entraîne un risque d'erreur.

Le fournisseur de tels catalogues, tarif et rubrique technique se trouve quant à lui chargé de la mise à jour et diffusion, ce qui nécessite des opérations d'édition, d'impression, toujours coûteuses.

*Art Antérieur*

Il existe de nombreux systèmes qui permettent d'afficher des données numériques ou alphabétiques mais qui n'ont pas la possibilité d'afficher une image complexe; les systèmes d'affichage de données graphiques quant à eux nécessitent des unités centrales très puissantes, des mémoires de grandes dimensions et en conséquence de par leur prix, ces systèmes ne sont pas accessibles aux petits établissements tels que magasins de pièces détachées ou autres.

Les systèmes utilisant des vidéodisques permettent de mémoriser des informations graphiques (images) et alphanumériques mais il est difficile d'apporter des modifications aux informations numériques et en conséquence leur utilisation dans le domaine de la confection et de la gestion de catalogue et de tarifs est difficilement envisageable.

Le document DE-A-1 499 213 décrit un système d'emmagasinage et de restitution d'informations dans lequel les informations sont stockées sur un support d'enregistrement tel qu'un film optique, chaque image affichée sur l'écran contenant un code optique dont la lecture par un moyen tel qu'un pistolet lumineux génère un signal de commande pour aller chercher dans le même support d'enregistrement des informations plus détaillées associées à la première image et provoquer leur affichage sur l'écran.

Ce système est donc essentiellement un système de recherche d'images sur un support d'enregistrement tel qu'un film.

La demande de brevet EP-A-30 160, décrit un système qui utilise un ordinateur pour générer des images à afficher et des informations alpha-numériques. Ce système ne permet pas d'afficher des informations alpha-numériques relatives à n'importe quel élément sélectionné de l'image et ne permet pas à l'opérateur de changer les informations alpha-numériques mémorisées. Ce système ne peut pas être utilisé pour la gestion de catalogue, mais est un système fournissant à un opérateur les instructions nécessaires pour la commande d'une machine.

Le brevet AU-A-71865/81 décrit un système du même type, pour contrôler un procédé industriel.

Deux tables stockées dans la mémoire de l'ordinateur permettent d'afficher des informations alphanumériques correspondantes à un élément de l'image indiqué par l'opérateur. L'ordinateur adresse la première table selon les coordonnées de l'élément indiqué. La première table donne l'adresse dans la deuxième table où se trouvent les informations à afficher.

*Résumé de l'Linvention*

Un objet de la présente invention est donc de réaliser un système permettant de gérer les informations contenues dans des catalogues, notamment les informations picturales.

Un autre objet de la présente invention est de réaliser un tel système qui soit facile à manipuler.

Le système de gestion d'informations visualisables et descriptives permettant de retrouver facilement des données relatives à des parties de schémas détaillés est defini par la revendication 1. En gros il comprend:

. des premiers moyen pour afficher sur un écran des images de schémas détaillés, ces moyens comprenant dans un mode de réalisation préféré, une unité pour lire un support d'enregistrement vidéo sur disque ou bande sur lequel sont enregistrées les images des schémas détaillés, et un terminal à écran d'affichage associé à un clavier et un photostyle,

. un bus d'entrée/sortie et un bus de contrôle auxquels sont attachés lesdits premiers moyens,

. un mini-ordinateur ou microprocesseur associé à au moins une mémoire, le microprocesseur et la mémoire étant connectés aux bus d'entrée/sortie et de contrôle, ladite mémoire comprenant en plus du programme de commande du système, au moins deux tables de correspondance pour chaque image. L'une contient en des positions d'adresses en mémoire déterminées lors de sa création les informations relatives à chacun des éléments de l'image. L'autre est constituée d'autant d'éléments que l'on aura figuré de divisions dans l'écran; elle permet la correspondance entre les coordonnées des images affichées et les positions d'adresses de la première table. Lorsqu'une image sélectionnée est affichée sur l'écran, par l'intermédiaire d'un signal de contrôle envoyé par le clavier dans le mode de réalisation préféré, le microprocesseur en réponse au signal de commande envoyé par le photostyle pointé sur un élément sélectionné de l'écran, provoque après consultation des tables, l'affichage des données contenues en mémoire, relatives à cet élément.

Ce système comporte de plus une unité d'enregistrement à support magnétique ou mini-disque servant à contenir les tables de correspondances relatives aux images, support qui est utilisé comme moyen de diffusion aux utilisateurs pour permettre le chargement dans la mémoire du système de l'utilisateur, des tables de correspondance.

*Brève Description des Figures*

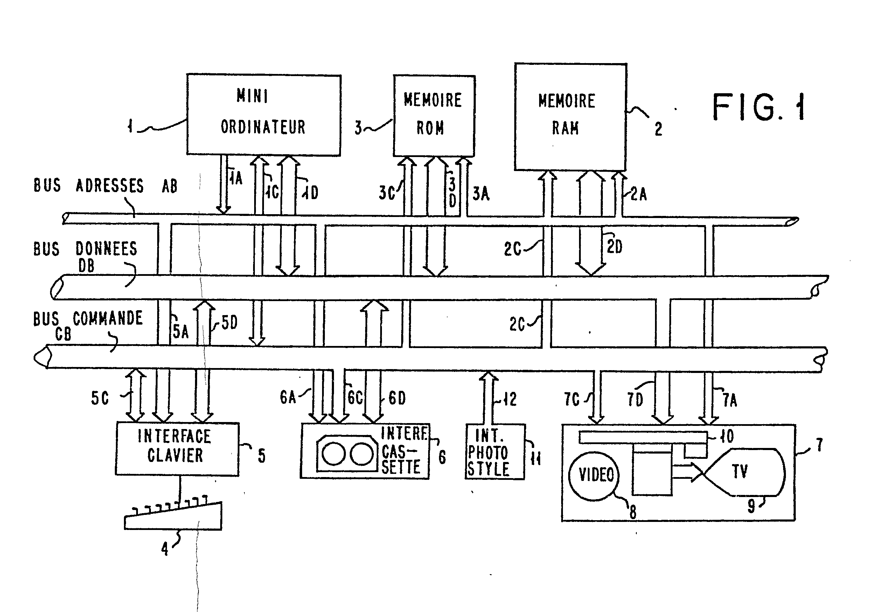

La figure 1 représente le système de la présente invention.

La figure 2 représente schématiquement, l'écran sur lequel est affiché une image.

La figure 3 représente les différentes tables qui sont générées à partir de cette image, par l'opérateur utilisant le clavier.

La figure 4 représente l'organigramme du programme d'édition.

La figure 5 représente l'arrangement des enregistrements sur la bande magnétique dans la cassette.

La figure 6 représente l'organigramme du programme de consultation.

La figure 7 représente le schéma de l'unité 7 de la figure 1.

*Description Détaillée de l'Invention*

Le système conforme à l'invention comporte un mini-ordinateur associé à des dispositifs d'entrée/sortie. Le mini-ordinateur peut être du type IBM «Personal Computer» qui se compose des éléments suivants: un microprocesseur INTEL 8088, 1, avec une horloge interne de 4,77 MHz, d'une mémoire à accès aléatoire RAM 2 de capacité pouvant aller jusqu'à 256 kilo-octets, un temps d'accès de 250 ns, une durée de cycle de 410 ns, d'une mémoire morte ROM 3 de capacité 40 kilo-octets et qui contient le programme de support Microsoft Basic-80 qui assure les fonctions du système, et de gestion des périphériques qui lui sont connectés.

De façon classique ce mini-ordinateur communique avec des unités périphériques par des bus d'adresses, de données et de contrôle AB, DB, CB. Les bus d'adresses et de données peuvent être en fait un même bus. Ils ont été représentés distincts sur le dessin.

Les unités d'entrée/sortie comprennent: un clavier 4 associé à un interface 5, le clavier comportant des touches alpha-numériques pour envoyer des messages et des touches de fonctions permettant à un opérateur d'effecteur des commandes spécialisées. L'interface permet aux signaux émis par le clavier d'être transformés en informations qui peuvent être véhiculées sur le bus.

Un autre élément 6 est une unité à cassette magnétique associée à un interface connecté aussi aux bus.

Un ensemble 7, comprenant une unité 8 permettant de lire un support vidéo tel qu'un disque et une unité d'affichage 9 sur écran télévision sur laquelle peuvent être affichés des messages venant du bus de données ou les informations lues du disque vidéo. Cet ensemble 7 est donc connecté aux bus de contrôle, de données et d'adresses pour recevoir du clavier des signaux de commande par exemple d'avancement du disque et pour recevoir des données à afficher. Un interface 10 est prévu pour que les données sur le bus soient compatibles avec les signaux acceptables par l'unité 9 et permet la lecture également des compteurs de balayage de l'écran d'une façon qui sera décrite ultérieurement.

Un photostyle 11, permet à l'opérateur de communiquer avec le système. Le photostyle fonctionne de la façon suivante: le crayon étant pointé sur un point de l'écran, sa cellule photoélectrique est excitée par le flux lumineux déclenché par le passage du faisceau d'électrons sur ce point du tube cathodique. Cette excitation après mécanisme de validation est transmise sous forme d'impulsions à un dispositif d'interface avec le mini-ordinateur par le moyen d'un bus de contrôle 12. Le microprocesseur 1 est alerté de ce signal par une interruption.

Le programme chargé de la gestion de cette interruption émet en direction du dispositif 10 d'interface avec l'écran des commandes provoquant la lecture des compteurs de balayage. Avec ces valeurs, par un mécanisme de consultation des tables situé en mémoire 3, la case de l'écran sur laquelle pointait le crayon est déterminée.

Les bus qui connectent les différents éléments aux bus AB, DB, CB sont référencés par le numéro de référence de l'élément suivi de la lettre A, D et/ou C indiquant qu'il s'agit d'un bus d'adresses de données ou de contrôle respectivement.

Le système de la présente invention est utilisé pour réaliser les deux types d'opérations suivantes:
. opération d'édition des supports vidéo et description, et
. opération de consultation de ces supports pour la recherche d'informations.

Ces deux opérations sont réalisées sous contrôle d'un programme d'édition et d'un programme de consultation dont les organigrammes seront donnés ultérieurement.

Conformément à l'invention on crée les supports vidéo: disques vidéo dans le mode de réalisation préféré, en prenant au moyen d'une caméra vidéo une succession d'images.

La première image du disque représentera l'intitulé et les informations l'identifiant. La seconde image comprendra une table des matières qui permettra à l'opérateur de sélectionner la vue recherchée. Puis viendront les images proprement dites des vues éclatées des différentes machines. Chaque vue comporte une clé d'identification qui est la référence de la machine concernée. Le support vidéo étant créé il reste à préparer l'ensemble des informations s'y rattachant que l'on veut mettre à la disposition de l'opérateur client. Ces informations résideront sur la cassette magnétique qui peut être lue ou écrite par le dispositif 6.

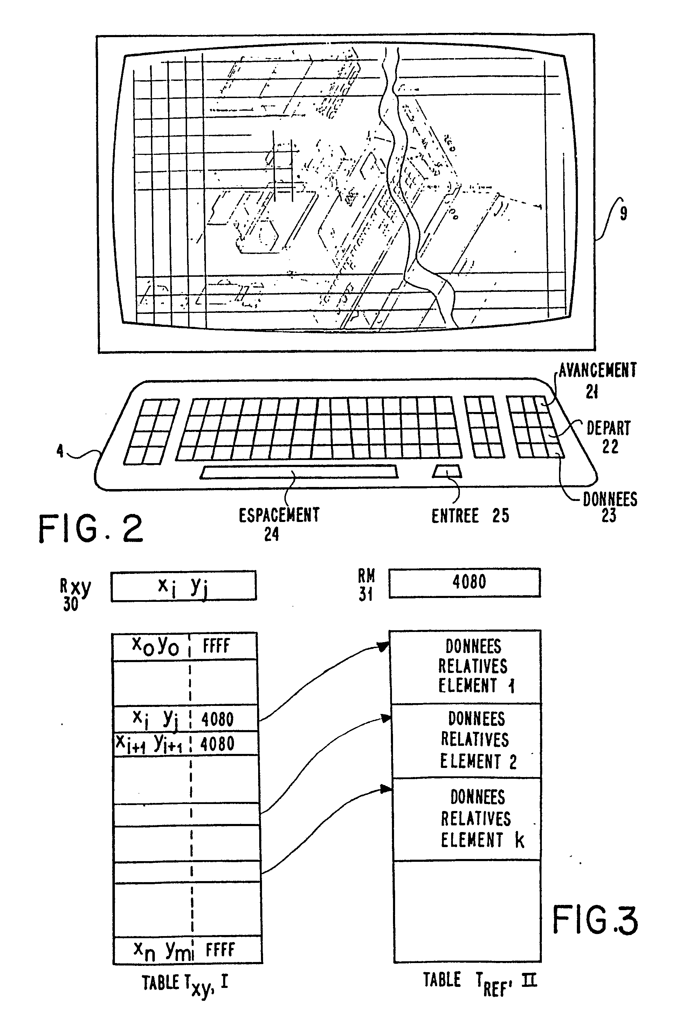

Le système proposé utilise un procédé de traitement d'un image et des données associées, l'écran et l'image étant virtuellement divisés en une pluralité de cases comme décrit ultérieurement en référence à la figure 2. L'image sera créée en respectant cette division, la mise au point étant réalisée à travers un viseur reproduisant le quadrillage.

De la sorte on s'assure que chacun des constituants du schéma occupera une case différente sur l'image projetée.

Ces informations seront de deux types à savoir:

. la description topographique de l'image quand elle est projetée sur l'écran, ce qui deviendra pour le système la table 1 représentée sur la figure 3, utilisée par le mécanisme de corrélation des coordonnées $x_i$ $y_i$ correspondant à une case de l'image, avec un emplacement mémoire ou se trouvent les informations correspondant à l'élément particulier de cette case. L'image est découpée en une pluralité de cases de coordonnées $x_i$ $y_i$ qui constituent une grille comme représenté schématiquement sur la figure 2,

. les nomenclatures relatives à chacun des objets de l'image, affectées des adresses où elles seront chargées en mémoire.

Le procédé de création de ces tables utilisera le système de l'invention, un programme d'édition étant appelé en mémoire.

Le clavier mis à la disposition de l'opérateur comporte en plus des touches représentant les chiffres de l'alphabet, des touches dites de fonctions auxquelles ont peut associer une opération spécifique.

Une touche «avancement image» provoquera chaque fois que l'opérateur l'enfoncera, la recherche de l'image suivante sur le disque vidéo lu par l'unité 8 et son affichage sur l'écran de l'unité 9, la lecture de la clé de référence associée à cette image permettant la recherche des informations correspondantes sur la cassette.

Une touche «départ» avertit le système que l'opérateur ayant accepté l'image alors affichée va commencer des opérations. Selon que le système sera utilisé pour l'édition ou la consultation, des actions différentes seront déclenchées par les différents programmes décrits par ailleurs.

Le disque vidéo précédemment créé est mis en place dans l'unité 8. La cassette qui lui correspond est mise en place dans l'unité 6. L'opérateur en charge de l'édition que l'on appelera dans la suite préparateur initialise la cassette avec les informations: description, intitulés, etc., qu'il entre au clavier.

Vient maintenant le procédé d'édition proprement dit qui va être décrit en référence aux figures 2 et 3.

Par enfoncement de la touche «Avancement image» 21 du clavier 4, le préparateur sélectionne l'image qu'il recherche. Il enfonce alors la touche «départ» 22. La clé d'identification CLE REF X figurant avec l'image sur le disque vidéo est transcrite sur la cassette soit directement, soit par le préparateur à partir du clavier.

Le programme d'édition va maintenant bâtir les tables de correspondance I et II de la figure 3 par interrogation du préparateur.

L'écran de l'unité 9 est considéré comme un ensemble de cases virtuelles, une représentation schématique est donnée sur la figure.

Bâtir la table I consiste à attribuer à chaque case de coordonnées $x_i$ $y_i$ l'adresse en mémoire où résideront les informations concernant l'élément occupant cette case. Pour toutes les positions de l'écran dans lesquelles il n'y a pas d'éléments de l'image, le programme sous contrôle du préparateur fait correspondre une indication par exemple FFFF indiquant que le champ est vide donc qu'il n'y a pas de correspondance en mémoire.

Si un élément de l'image occupe plusieurs cases elles seront toutes associées à la même position d'adresse.

Le programme gérera donc deux registres d'adresses situés dans la mémoire 2, à savoir un registre «cases adressés» 30 et un registre «mémoire» 31 représentés schématiquement sur la figure 2. Le registre 30 référence les cases $x_i$ $y_i$, l'autre 31 les adresses des positions mémoires attribuées.

Le registre adresse étant mis à 1, au début de l'opération par le programme, le programme provoque alors sur l'écran, la projection superposée à l'image d'un curseur situé dans la zone correspondant à la case 1 de coordonnées $x_o$ $y_o$, ainsi qu'un message invitant le préparateur à introduire les informations qu'il souhaite.

Si cette position de l'écran est vide, il appuiera sur la touche «Espacement» 24. Il viendra alors dans la table I, le symbole choisi FFFF. Le registre 30 est incrémenté, le curseur se déplace vers la case suivante et le préparateur est de nouveau sollicité.

Si cette nouvelle position contient un élément que le préparateur veut référencer, il enfonce la touche «DONNEES» 23 et par le clavier il introduit les informations qu'il souhaite enregistrer. Ces informations sont traduites en code interne EBCDIC par exemple et rangées en mémoire à partir de l'adresse figurant dans le registre 31 qui est incrémenté au fur et à mesure des positions utilisées. L'adresse de départ vient dans la table I en regard de la position de la case concernée.

Le préparateur ayant terminé l'entrée des données, appuie sur la touche «entrée» 25 qui provoque l'envoie des données dans la mémoire.

Le processus se continue case par case jusqu'à ce que tout l'écran ait été balayé.

A ce moment, les deux tables I et II sont remplies, elles sont alors transférées de la mémoire 2 sur la cassette à la suite de la clé de référence de l'image concernée.

La seconde image qui contient la table des matières est traitée de la même façon que les images des vues éclatées, c'est-à-dire que deux tables de correspondance $T_{xy}$ et $T_{REF}$ sont générées. A la différence d'une tables associée à un schéma, la table $T_{REF}$ ne contiendra pas d'informations descriptives mais le numéro de séquence sur le disque de chacune des images répertoriées dans la table des matières.

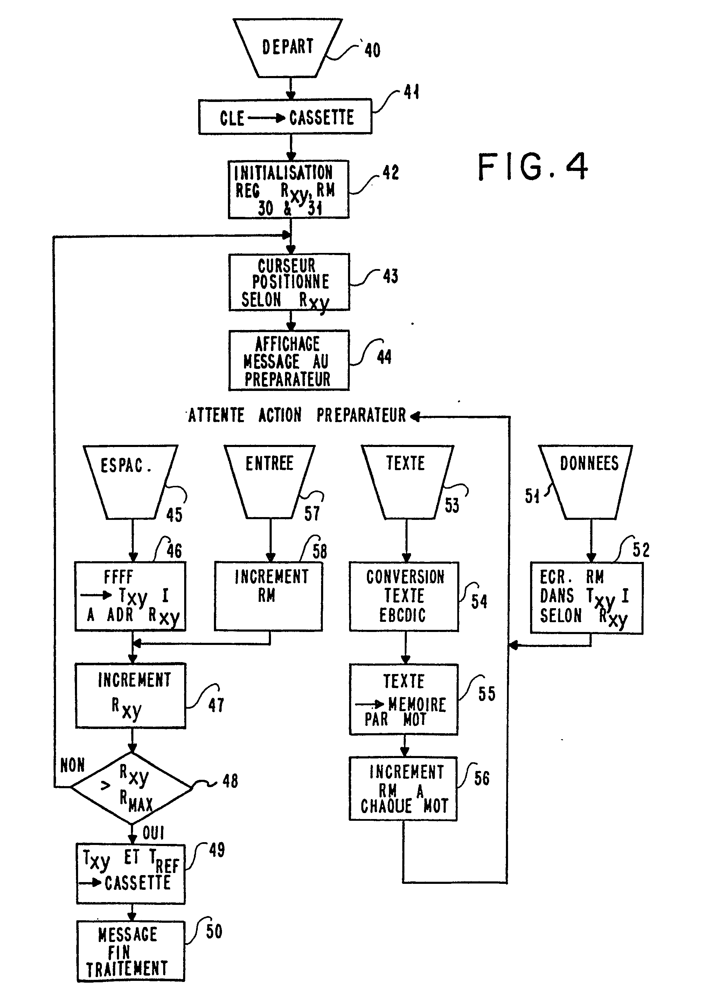

L'organigramme du programme d'édition est représenté sur la figure 4. Lors de l'enfoncement de la touche «départ» 22, étape 40, le programme confirme le choix de l'image et à l'étape 41 il provoque l'envoi de la clé de référence enregistré sur le disque vidéo sur la cassette. Dans l'étape 42, les registres d'adresses $R_{xy}$ 30 et RM 31 sont initialisés, le registre $R_{xy}$ est mis à 1 et RM est chargé avec la première position en mémoire disponible. A l'étape 43, un ordre de positionnement du curseur selon la valeur de $R_{xy}$ est envoyé, à l'étape 44, un message est affiché à l'écran sollicitant le préparateur.

Si l'opérateur enfonce la touche «espacement» 24, le programme détecte cetter action, étape 45, et provoque l'écriture de FFFF dans la table $T_{xy}$ I à l'adresse contenue dans le registre $R_{xy}$ 30, étape 46. A l'étape 47, le registre $R_{xy}$ 30 est incrémenté. A l'étape 48, le contenu du registre $R_{xy}$ est testé pour déterminer si on a atteint la dernière case des coordonnées maximum $x_m y_m$ $R_{Max}$. Si $R_{xy}$ est inferieur à $R_{Max}$ le programme revient à l'étape 43. Si $R_{xy}$ est égal à $R_{Max}$ le programme à l'étape 49 provoque l'enregistrement sur la cassette des tables $T_{xy}$ et $T_{REF}$ I et II puis envoie à l'étape 50 un message au préparateur indiquant la fin du traitement de l'image en cours.

Si l'opérateur a enfoncé la touche «Données» 23, le programme détecte cette action étape 51 et provoque dans l'étape 52 l'écriture du contenu du registre RM dans la table $T_{xy}$ I selon l'adresse dans le registre $R_{xy}$ et attend l'action du préparateur. Si, il enfonce les touches alpha-numériques pour écrire du texte, les actions sont détectées, étape 53. Le texte est converti en code interne étape 54, il est rangé, étape 55, en mémoire par unité mot mémoire, selon le contenu du registre RM 31. Le registre RM 31 est incrémenté (étape 36) à chaque mot mémoire. Lorsque l'opérateur a fini d'entrer les informations alpha-numeriques, il enfonce la touche «Entrée» 25. Cette action est détectée étape 57, le registre RM 31 est incrémenté, et on passe à l'étape 47 pour passer à une autre case de l'écran.

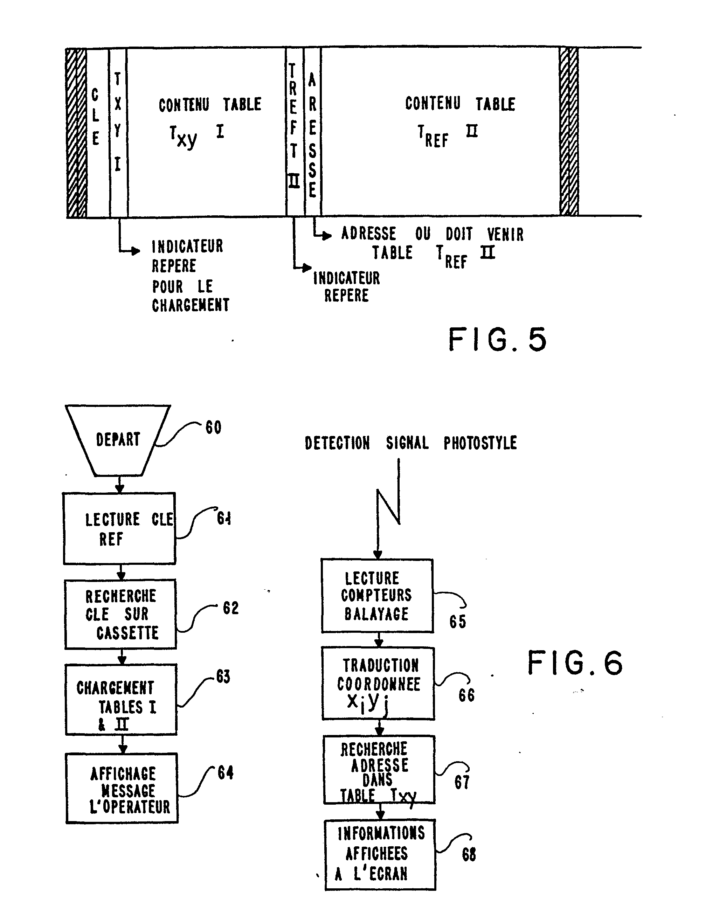

La bande magnétique dans la cassette obtenue après préparation des images est organisée comme représenté sur la figure 5. Elle est segmentée image par image. Un code spécial d'indexation est enregistré au début des informations correspondant à une image afin d'accélérer la recherche. Vient ensuite un champ de référence permettant de faire la corrélation avec l'image projetée, champ qui comprendra la clé de référence.

Vient ensuite la table $T_{xy}$ I de longueur fixe puisqu'elle contient toutes les cases de l'écran puis la table $T_{REF}$ II avec son adresse de chargement.

Les supports vidéo et magnétiquement étant créés, ils seront distribués aux différents utilisateurs, qui pourront les utiliser de la façon suivante:

Les supports vidéo et magnétiques étant installés dans les unités 8 et 6 respectivement, la première image puis la seconde image sont présentées à l'opérateur. Les tables correspondant à cette seconde image situées au début de la cassette sont envoyées en mémoire RAM 2 et l'opérateur peut désigner sur l'écran la vue recherchée à l'aide du photostyle. Le numéro de séquence de l'image est extrait des tables de correspondance et transmis au dispositif d'interface 10 de l'unité d'affichage lui permettant de commander le positionnement du disque. Si l'opérateur le désire cette opération peut être faite manuellement. L'image recherchée ayant été sélectée, l'opérateur enfonce la touche «départ», la clé de référence permet de retrouver sur la cassette les informations correspondant à cette image, informations sous la forme des deux tables $T_{xy}$ I et $R_{REF}$ II. Ces tables sont transférées en mémoire à leurs adresses respectives de chargement.

Le système est ainsi initialisé et à disposition de l'utilisateur qui par le moyen du photostyle indique l'objet qui l'intéresse. La position du photostyle sur l'écran est interprétée par lecture des compteurs de balayage. Le mécanisme de traduction fournit les coordonnées $x_i y_i$ de la case correspondante qui reportées dans $T_{xy}$ indiquent l'adresse mémoire dans $T_{REF}$ où figurent les informations recherchées.

A ce point, de très nombreuses applications sont possibles, interrogation de stock, compatibilité, etc.

L'organigramme du programme de consultation est représenté sur la figure 6.

L'enfoncement de la touche «départ» 22 est détecté par le programme étape 60. La clé de référence est lu: étape 61. La bande dans la cassette est déplacée pour retrouver cette clé de référence: étape 62. Ensuite, les tables $T_{xy}$ I et $T_{REF}$ II sont chargées en mémoire, étape 63. Un message est affiché à l'intention de l'opérateur indiquant que la recherche des informations concernant un objet peut commencer: étape 64.

L'opérateur pointe le photostyle sur un point de l'écran. La détection du signal correspondant provoque la lecture des compteurs de balayage: étape 65. Ces informations sont traduites en coordonnées $x_i y_i$ de la case de l'objet concerné: étape 66. Par consultation de la table I, l'adresse en mémoire où se trouvent les informations concernant cet objet est déterminée: étape 67. La position mémoire correspondante est adressée et lue et les informations sont affichées sur l'écran: étape 68.

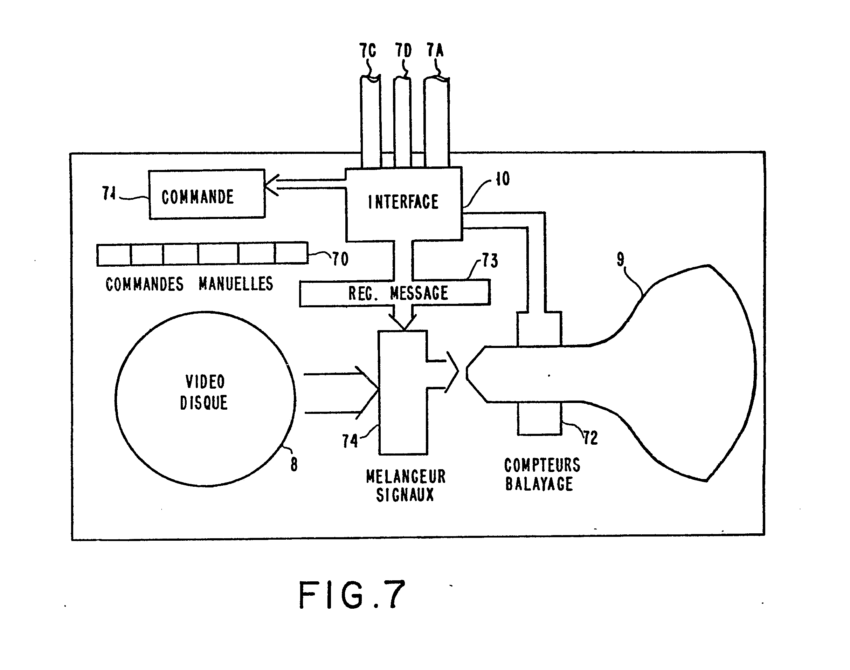

On va maintenant décrire en référence à la figure 7, l'ensemble 7.

Cet ensemble comporte l'unité de lecture du disque vidéo 8 représenté symboliquement par le cercle, avec des commandes manuelles 70, pour le contrôle mécanique du disque, marche/arrêt, avancement etc. et des circuits de commande 71, qui reçoivent les ordres des bus DB et CB par l'intermédiaire de l'interface 10 pour faire avancer le disque et l'arrêter sur une image.

L'interface 10 est un circuit logique classique qui permet la connexion aux bus AB, DB et CB pour réaliser les fonctions suivantes:

. reconnaissance de l'adresse de l'ensemble 7, lorsqu'elle se trouve sur le bus d'adresse AB et transmise à l'interface par le bus 7A,

. interception des commandes sur le bus 7C et des messages sur le bus données 7D. Les commandes sont les suivantes:

. ordre de positionnement du disque, contrôle de la fin de disques qui sont envoyés aux circuits de commande 71 des mécanismes d'entraînement et d'asservissement du disque,

. mise enforme des messages devant être affichés, et ordre de positionnement du curseur sur l'écran de lunité d'affichage 9,

. lecture des compteurs de balayage 72 dont le contenu est transmis à l'interface 10, pour être transmis sur le bus de données 7D au mini-ordinateur qui provoquera par consultation de tables dans la mémoire 3, la transformation de ces valeurs en coordonnées $x_i$ $y_i$.

Les messages à afficher venant du bus 7D sont stockés dans le registre 73. Un mélangeur de signaux 74 permet l'affichage sur l'écran de l'unité 9, des messages superposés à l'image lue sur le disque.

Le mode de réalisation préféré de l'invention précédemment décrit utilise le vidéo disque comme support des informations visuelles.

Partant du même principe de création d'image et l'utilisation de sa decription topographique par les mécanismes de traduction, on peut réaliser un système conforme à l'invention en utilisant des diapositives ou films photographiques comme autres supports des informations visualisables.

L'équivalent des fonctions fournies par l'écran cathodique et le photostyle sont permises par l'utilisation comme écran de projection pour la diapositive ou le film d'une tablette graphique du type du système graf-pen décrit à la page 130 de l'ouvrage: «Images et ordinateur —— introduction à l'infographie interactive» par Pierre Morvan et Michel Lucas aux Editions Larousse. La tablette est une simple plaque de verre dépolie dont les dimensions peuvent être très grandes, ce qui est un avantage par rapport à l'écran TV. Le photostyle est remplacé par un stylet à fonction d'éclateur qui émet des ultra-sons dès qu'on l'appuie sur la tablette. Des détecteurs acoustiques disposés sur les bords de la tablette recueillent ces sons et localisent la position de l'émetteur. Un compteur est alloué à chaque coordonnée et le comptage qui démarre à l'émission de l'étincelle, s'arrête à la détection du front d'onde. Les messages envoyés à l'opérateur seront visualisés sur un petit écran de contrôle par exemple l'écran de l'unité «IBM Monochrome Display» ou d'un poste télévision du commerce par l'intermédiaire d'un modulateur haute fréquence RF.

L'avantage de ce mode de réalisation est qu'on utilise un écran de grande dimension, et que l'on peut diffuser des messages sur de nombreux écrans de contrôles. En conséquence, on peut envisager d'autres applications à toutes les installations de contrôle aéroport, ville, sites industriels, travaillant sur des plans de situations, des circuits électriques, etc.

**Revendications**

1. Système de gestion d'informations, visualisables et descriptives relatives à des images, du type comportant des moyens d'emmagasinage et d'affichage d'images (7) comprenant une source d'images picturales complexes (8) et une unité d'affichage (9) sur l'écran de laquelle peuvent être affichées les images et des informations alpha-numériques, ledit système étant caractérisé en ce qu'il comprend:

au moins un bus d'entrée/sortie (AB, DB) et un bus de contrôle (CB) auxquels sont connectés les premier moyens,

un mini-ordinateur (1), différent des premier moyens, associé à une mémoire (2) pour le stockage des programmes de commande du mini-ordinateur et de tables de correspondance ($T_{REF}$ et $T_{xy}$), ledit mini-ordinateur et ladite mémoire étant connectés au bus d'entrée/sortie et au bus de contrôle, la première table ($T_{REF}$) étant destinée à stocker des informations descriptives relatives à chacun des éléments de l'image, situées en des positions d'adresses déterminées dans la mémoire, et la seconde table ($T_{xy}$) étant destinée à faire la correspondance entre les coordonnées ($x_i$ $x_j$) correspondant à des cases élémentaires de l'image et l'adresse en mémoire où se trouvent les informations descriptives relatives à l'élément de l'image occupant la case,

des moyens dentrée de données (4,5), connectés au bus d'entrée/sortie (AB, DB) et de commande (CB) pour permettre l'établissement des tables de correspondance relatives à chaque image,

des moyens (6) de lecture et d'écriture d'informations alpha-numérique sur un support magnétique connectés aux bus d'entrée/sortie (AB, DB) et de contrôle (CB) pour transférer les tables de correspondance de la mémoire (3) au support magnétique ou depuis le support magnétique dans la mémoire, et

des moyens de repérage (11) d'image, qui sont connectés au bus de contrôle (CB) pour envoyer au mini-ordinateur les coordonnées d'une case sélectionnée de l'image, lesdites coordonnées étant utilisées par le mini-ordinateur pour adresser la seconde table ($T_{x,y}$), la lecture de cette seconde table fournissant l'adresse de la première table ($T_{REF}$) à laquelle se trouvent les informations relatives à l'élément repéré, de telle sorte que la lecture desdites informations en permet d'affichage sur écran.

2. Système selon la revendication 1, caractérisé en ce que les moyens d'emmagasinage et d'affichage (7) comprennent:

une unité de reproduction de support vidéo (8) sur lesquels sont enregistrées les images des schémas détaillés,

un interface (10) pour relier l'unité de reproduction de support vidéo et l'unité d'affichage (9), au bus d'entrée/sortie (AB, DB) et au bus de contrôle (CB), afin que le moyen d'entrée de données envoie des signaux de commande à l'unité de reproduction de support vidéo, et que des messages venant du programme stocké en mémoire ou du support d'enregistrement magnétique puissent être affichés sur l'écran.

3. Système selon la revendication 1 ou 2, caractérisé en ce que l'unité d'affichage (9) comporte un tube cathodique d'affichage associé à des compteurs de balayage (72).

4. Système selon la revendication 3, caractérisé en ce que les moyens de repérage d'image comportent un photostyle (11) qui lorsqu'il est pointé sur un point de l'écran provoque sous contrôle du programme de consultation, l'envoi au mini-ordinateur du contenu des compteurs de balayage pour en déduire la valeur des coordonnées ($x_i$ $y_j$) de la case correspondante de l'image.

**Patentansprüche**

1. Verwaltungssystem für darstellbare und beschreibende Daten, dessen Art Bildspeichermittel und Bilddarstellungsmittel (7) beinhaltet, zu denen eine Quelle für komplexe Schriftbilder (8) und eine Darstellungseinheit (9) gehören, auf deren Bildschirm Bilder und alphanumerische Daten dargestellt werden können, wobei das genannte System dadurch gekennzeichnet ist, dass es folgendes umfasst:

mindestens einen Eingangs-/Ausgangs-Datenbus (AB, DB) und einen Kontroll-Datenbus (CB), mit denen die erstgenannten Mittel verbunden sind,

einen Kleinrechner (1), der sich von den erstgenannten Mitteln unterscheidet und mit einem Speicher (2) zum Abspeichern der Steuerprogramme des Kleinrechners und der Korrespondenztafeln ($T_{REF}$ und $T_{xy}$) ausgerüstet ist, wobei der genannte Kleinrechner und der genannte Speicher mit dem Eingangs-/Ausgangs-Datenbus und mit dem Kontroll-Datenbus verbunden sind und die erste Tafel ($T_{REF}$) zum Abspeichern beschreibender Informationen, die sich auf jedes der Bildelemente beziehen und die in bestimmten Adressenpositionen des Speichers abgelagert sind, vorgesehen ist während die zweite Tafel ($T_{xy}$) zum Herstellen des Querverweises zwischen den Koordinaten ($x_i$, $y_j$), die den elementaren Feldern des Bildes entsprechen, und der Adresse im Speicher dient, unter der die beschreibenden Daten zum Bildelement, welches das Feld besitzt, erreichbar sind,

Dateneingabemittel (4, 5), die mit dem Eingangs-/Ausgangs-Datenbus (AB, DB) und dem Kontroll-Datenbus (CB) verbunden sind, um die Erstellung der Korrespondenztafeln für jedes Bild zu ermöglichen,

Mittel (6) zum Ein- und Auslesen von alphanumerischen Daten auf einem magnetischen Datenträger, die mit dem Eingangs-/Ausgangs-Datenbus (AB, DB) und mit dem Kontroll-Datenbus (CB) verbunden sind, um die Korrespondenztafeln vom Speicher (3) zum magnetischen Datenträger bzw. vom magnetischen Datenträger zum Speicher zu übertragen, und Mittel zum Markieren des Bildes (11), die mit dem Kontroll-Datenbus (CB) verbunden sind, um dem Kleinrechner die Koordinaten eines gewählten Feldes des Bildes zu übermitteln, wobei die genannten Koordinaten vom Kleinrechner zum Adressieren der zweiten Tafel ($T_{x,y}$) gebraucht werden und das Lesen dieser zweiten Tafel die Adresse der ersten Tafel ($T_{REF}$) liefert, in der sich die Daten bezüglich des markierten Elements befinden, so dass derart das Lesen der genannten Daten die Darstellung auf dem Bildschirm ermöglicht.

2. System nach Anspruch 1, dadurch gekennzeichnet, dass die Speicher- und Darstellungsmittel (7) folgendes umfassen:

eine Einheit zum Reproduziereen von Video-Trägern (8), auf denen die Bilder der detaillierten Schemen registriert sind,

eine Schnittstelle (10), um die Reproduziereinheit des Video-Trägers und die Darstellung (9) mit dem Eingang-/Ausgangs-Datenbus (AB, DB) und dem Kontroll-Datenbus (CB) zu verbinden, damit das Daten-Eingabemittel der Reproduziereinheit des Video-Trägers Steuersignale übermittelt und die Meldungen, die vom abgespeicherten Programm oder vom Träger der magnetischen Registrierung kommen, auf dem Bildschirm dargestellt werden können.

3. System nach Anspruch 1 oder 2, dadurch gekennzeichnet, dass die Darstellungseinheit (9) eine Kathodenstrahlröhre zur Darstellung umfasst, die mit Abtastzählern (72) zusammengeschaltet ist.

4. System nach Anspruch 3, dadurch gekennzeichnet, dass die Bildmarkierungsmittel einen Leuchtstift (11) umfassen, der, auf einen Punkt des Bildschirms gerichtet, unter Kontrolle des Abfrageprogramms die Übermittlung des Inhalts der Abtastzähler zum Kleinrechner verursacht, um daraus den Wert der Koordinaten ($x_i$ $y_j$) des entsprechenden Bildfeldes zu bestimmen.

**Claims**

1. An image visualizable and descriptive data handling system of the type which includes storage and display means (7) being comprised of a complex pictural image source (8) and a display unit (9) upon the screen of which images and alphanumerical information can be displayed, said system being characterized in that it includes:

at least one input/output bus (AB, DB) and one control bus (CB) which the first means are connected to,

a mini-computer (1), different from the first means associated with a memory (2) for storing mini-computer control programs and correspondence tables ($T_{REF}$ and $T_{xy}$), said mini-computer and memory being connected to the input/output bus and the control bus, the first table ($T_{REF}$) being utilized to store description information relative to each of the image elements and located in determined address positions in the memory, and the second table ($T_{xy}$) being utilized to ensure the correspondance between the coordinates ($X_i$ $y_j$) corresponding to the image elementary squares and the memory address containing the descriptive information relative to that image element which occupies the square,

data input means (4, 5) connected to the input/output bus (AB, DB) and to the control bus (CB) in order to build-up the correspondence tables relative to each image,

reading and writing means (6) for reading or writing alphanumerical information out/into a magnetic support, connected to the input/output busses (AB, DB) and to the control bus (CB) in order to transfer the correspondence tables from the memory (2) to the magnetic support or from the magnetic support to the memory, and

image locating means (11) connected to the control bus (CB) for sending the coordinates of a selected image square to the mini-computer, said coordinates being utilized by the mini-computer in order to address the second table ($T_{x, y}$), the reading of said second table supplying the first table ($T_{REF}$) address that contains the information relative to the located element, so that reading said information can be displayed on the screen.

2. A system according to claim 1, characterized in that the storage and display means (7) are comprised of:

a playing unit (8) for video supports on which the images of the schematic detailed layouts, are recorded,

an interface (10) for connecting the video support playing unit and display unit (9) to the input/output busses (AB, DB) and to the control bus (CB) so that the data input means can send control signals to the video support playing unit, and messages coming from the memory or from the magnetic support can be displayed on the screen.

3. A system according to claim 1 or 2, characterized in that the display unit (9) is comprised of a display cathode ray tube associated with scanning counters (72).

4. A system according to claim 3, characterized in that the image loacting means are comprised of a light pen (11) which, when pointed to a point of the screen, causes, under the control of the consulting program, the contents of the scanning counters to be sent to the mini-computer in order to deduce from said counter contents the values of the coordinates $(x_i\ y_i)$ of the square corresponding to the image.

FIG. 1

MEMOIRE RAM — 2

MEMOIRE ROM — 3

MINI ORDINATEUR — 1

INTERFACE CLAVIER — 5

INTERF. CAS-SETTE — 6

INT. PHOTO STYLE — 11

TV — 9

VIDEO — 8

BUS ADRESSES AB

BUS DONNEES DB

BUS COMMANDE CB

1A, 1C, 1D
2A, 2C, 2D
3A, 3C, 3D
5A, 5C, 5D
6A, 6C, 6D
7A, 7C, 7D
10, 12, 7, 4

0 082 904

FIG. 2

$R_{xy}$ 30 | $x_i$ $y_j$

$RM$ 31 | 4080

TABLE $T_{xy}$, I

TABLE $T_{REF}$, II

FIG.3

11

0 082 904

# FIG.4

```
          DEPART          40

    CLE ──→ CASSETTE      41

    INITIALISATION        42
    REG  Rxy, RM
       30 & 31

    CURSEUR               43
    POSITIONNE
    SELON  Rxy

    AFFICHAGE             44
    MESSAGE  AU
    PREPARATEUR

    ATTENTE  ACTION  PREPARATEUR

  ESPAC.   ENTREE   TEXTE   DONNEES
    45      57       53       51

  FFFF     INCREMENT  CONVERSION  ECR. RM
  ──→ Txy I   RM      TEXTE       DANS Txy I
  A ADR Rxy            EBCDIC      SELON Rxy
    46      58       54           52

  INCREMENT          TEXTE
  Rxy                ──→ MEMOIRE
    47               PAR MOT      55

  NON   Rxy          INCREMENT
      >  RMAX        RM A        56
    48  OUI          CHAQUE MOT

  Txy ET Tref        49
  ──→ CASSETTE

  MESSAGE            50
  FIN
  TRAITEMENT
```

13

CONTENU TABLE T$_{xy}$ I

CONTENU TABLE T$_{REF}$ II

INDICATEUR
REPERE
POUR LE
CHARGEMENT

ADRESSE OU DOIT VENIR
TABLE T$_{REF}$ II

INDICATEUR
REPERE

## FIG. 5

DEPART — 60

LECTURE CLE
REF — 64

RECHERCHE
CLE SUR
CASSETTE — 62

CHARGEMENT
TABLES I
& II — 63

AFFICHAGE
MESSAGE
L'OPERATEUR — 64

DETECTION SIGNAL PHOTOSTYLE

LECTURE
COMPTEURS
BALAYAGE — 65

TRADUCTION
COORDONNEE
$x_i y_j$ — 66

RECHERCHE
ADRESSE
DANS
TABLE T$_{xy}$ — 67

INFORMATIONS
AFFICHEES
A L'ECRAN — 68

## FIG. 6

FIG.7